# EUROPEAN PATENT SPECIFICATION

(11) **EP 4 250 510 B1**
(45) Date of publication and mention of the grant of the patent: **29.04.2026**
(21) Application number: 23162786.0
(22) Date of filing: 20.03.2023
(51) Int. Cl.: H02J 3/14, B60L 55/00, H02J 7/00

(54) **V2G SYSTEM, PROGRAM, AND METHOD**
V2G SYSTEM, PROGRAMM UND VERFAHREN
SYSTÈME V2G , PROGRAMME ET PROCÉDÉ POUR CE SYSTÈME

(30) Priority: 22.03.2022 JP 2022045710
(43) Date of publication of application: 27.09.2023
(73) Proprietor: HONDA MOTOR CO., LTD., Tokyo 105-8404 (JP)
(72) Inventor: SAKURAI, Takayuki, Saitama, 351-0193 (JP); KANAZAWA, Hiroyuki, Saitama, 351-0193 (JP); WANG, Qianlong, Saitama, 351-0193 (JP); ISHIDA, Atsuya, Tokyo, 101-0025 (JP)
(74) Representative: Weickmann & Weickmann PartmbB

(56) References cited:
- US-A1- 2008 281 663
- US-A1- 2014 100 708
- US-A1- 2020 156 495
- US-A1- 2020 231 058
- US-A1- 2021 122 260

## Description

### BACKGROUND

### 1. TECHNICAL FIELD

The present invention relates to a system, a program, and a method.

### 2. RELATED ART

Patent Documents 1 to 7 disclose techniques relating to supply-demand adjustment of an electrical grid. Patent Document 8 discloses a technique to perform a control such that sufficient electric power is stored in the battery at a me point when the vehicle is used as a transportation means again while efficiently using the battery mounted on the vehicle. Patent Document 9 discloses a technique to supply an electric power system with electric power retained by vehicles that are used by being reserved, such as with car rental and car sharing. Patent Document 10 discloses a technique to make it possible to lower the possibility that the vehicle will not be able to supply power to the power network at the movement destination of the vehicle.

### PRIOR ART DOCUMENTS

### PATENT DOCUMENTS

Patent Document 1: Japanese Patent Application Publication No. 2021-87261
Patent Document 2: Japanese Patent Application Publication No. 2011-50240
Patent Document 3: Japanese Patent Application Publication No. 2021-150988
Patent Document 4: Japanese Patent Application Publication No. 2021-100326
Patent Document 5: Japanese Patent Application Publication No. 2021-149788
Patent Document 6: Japanese Patent Application Publication No. 2020-108301
Patent Document 7: Japanese Patent Application Publication No. 2021-16288
Patent Document 8: US Patent Application Publication No. 2021-122260
Patent Document 9: US Patent Application Publication No. 2014-100708
Patent Document 10: US Patent Application Publication No. 2020-231058

There is a problem that it is uneasy to effectively use a battery in order to achieve energy conservation.

### SUMMARY

A first aspect of the present invention provides a system. The system controls charging of multiple movable batteries and power supply from the multiple movable batteries to an outside. The system includes a controlling unit for providing an electrical power network with an electrical power resource by performing: at least one of a first control for reducing power charging amounts for the multiple movable batteries, or a second control for increasing power supplying amounts from the multiple movable batteries to outsides, in response to a first request for requesting power consumption to be reduced; and at least one of a third control for increasing power charging amounts for the multiple movable batteries, or a fourth control for reducing power supplying amounts from the multiple movable batteries to outsides, in response to a second request for requesting power consumption to be increased. The system includes an allocating unit for allocating, based on an amount of electrical power resources available to be provided to the electrical power network by each of the multiple movable batteries, and an amount of electrical power resources required to be provided to the electrical power network, by which of the first control, the second control, the third control, or the fourth control, the each of the multiple movable batteries provides the electrical power network with an electrical power resource in each of multiple timeframes in the future. If consumption power increases in the multiple timeframes, the controlling unit is configured to select, among the multiple movable batteries not allocated by the allocating unit, a movable battery that can provide electrical power for serving the increased consumption power, and provide electrical power for serving the increased consumption power, The controlling unit is configured to control, based on the allocating, a station that charges and discharges the movable batteries.

The system may also include an estimating unit for estimating, based on predicted usage situations of the multiple movable batteries, an amount of electrical power resources that can be provided to the electrical power network by each of the multiple movable batteries by using each of the first control, the second control, the third control, and the fourth control in each of multiple timeframes in the future.

The estimating unit may estimate, based on target values of consumption power to be consumed by the multiple movable batteries in every timeframe in a future, and predictions of charging/discharging amounts of the multiple movable batteries in a future, an electrical power resource required to be provided to the electrical power network in the each of multiple timeframes in the future.

The allocating unit may allocate an amount of electrical power resources to be provided to the electrical power network by the each of the multiple movable batteries by using any of the first control, the second control, the third control, and the fourth control in each of multiple timeframes in a future.

The allocating unit may preferentially allocate, when allocating whether the each of the multiple movable batteries provides the electrical power network with an electrical power resource, the first control over the second control, and the fourth control over the third control.

The allocating unit may allocate, so as to bring changes in electrical charging power or discharging power of the multiple movable batteries to be equal to or less than predefined values, by which of the first control, the second control, the third control, or the fourth control, the each of the multiple movable batteries provides the electrical power network with an electrical power resource in each of multiple timeframes in a future.

The estimating unit may allocate, based on an amount of electrical power resources available to be provided to the electrical power network by the each of the multiple movable batteries and an amount of electrical power resources required to be provided to the electrical power network, by which of the first control, the second control, the third control, or the fourth control, the each of the multiple movable batteries provides the electrical power network with an electrical power resource in each of multiple timeframes within a period in which an electrical power resource contracted in an electricity market should be provided to the electrical power network. The controlling unit may perform: at least one of the first control or the second control, in response to the first request being received within the period in which the electrical power resource should be provided to the electrical power network and based on an amount of electrical power resources estimated by the estimating unit as being available to be provided to the electrical power network; and at least one of the third control or the fourth control, in response to the second request being received within the period in which the electrical power resource should be provided to the electrical power network and based on an amount of electrical power resources estimated by the estimating unit as being available to be provided to the electrical power network.

The multiple movable batteries may include batteries mounted on vehicles.

The multiple movable batteries may include batteries that are mounted on the vehicles and exchangeable at multiple stations, and the allocating unit may be configured to allocate, based on a history of exchanging the batteries in the multiple stations, by which of the first control, the second control, the third control, or the fourth control of the battery for the vehicle provides electrical power for the electrical power network.

The controlling unit may be configured to provide the electrical power network with electrical energy obtained by integrating electrical power of the multiple movable batteries supplied in the multiple timeframes.

A second aspect of the present invention provides a program. The program causes a computer to function as the above system.

A third aspect of the present invention provides a method. The method includes providing an electrical power network with an electrical power resource by performing: at least one of a first control for reducing power charging amounts for the multiple movable batteries, or a second control for increasing power supplying amounts from the multiple movable batteries to outsides, in response to a first request for requesting power consumption to be reduced; and at least one of a third control for increasing power charging amounts for the multiple movable batteries, or a fourth control for reducing power supplying amounts from the multiple movable batteries to outsides, in response to a second request for requesting power consumption to be increased. The method includes allocating, based on an amount of electrical power resources available to be provided to the electrical power network by each of the multiple movable batteries, and an amount of electrical power resources required to be provided to the electrical power network, by which of the first control, the second control, the third control, or the fourth control, the each of the multiple movable batteries provides the electrical power network with an electrical power resource in each of multiple timeframes in the future. The method includes controlling, based on the allocating, a station that charges and discharges the movable batteries. If consumption power increases in the multiple timeframes, the providing an electrical power network with an electrical power resource includes selecting, among the multiple movable batteries not allocated by the allocating, a movable battery that can provide electrical power for serving the increased consumption power, and providing electrical power for serving the increased consumption power

The summary clause does not describe all necessary features of the present invention. The invention may also include a sub-combination of the features described above.

### BRIEF DESCRIPTION OF THE DRAWINGS

FIG. 1 illustrates an outline of a utilization form of an electrical power system 5 in one embodiment.
FIG. 2 illustrates one example of a system configuration of a system 100.
FIG. 3 is a graph schematically showing predicted electrical power 301 predicted to be consumed in a provision period, and a target electrical power 302.
FIG. 4 is a graph schematically showing estimated electrical power 311 in a provision period.
FIG. 5 is a graph schematically showing required electrical power 331 required for the system 100 to secure in a provision period.
FIG. 6 is a diagram for explaining one example of a method of calculating an electrical power resource available to be provided by a vehicle 10.
FIG. 7 is a diagram for explaining another example of the method of calculating an electrical power resource available to be provided by the vehicle 10.
FIG. 8 is a diagram for explaining yet another example of the method of calculating an electrical power resource available to be provided by the vehicle 10.
FIG. 9 schematically illustrates total electrical power and a total electrical energy available to be provided by all stations 30.
FIG. 10 is a schematic diagram for explaining control for allocating, in response to a demand, electrical power and electrical energy available to be provided, to a station 30a and a battery 12a.
FIG. 11 is a schematic diagram for explaining control for allocating, in response to a demand, electrical power and electrical energy available to be provided, to a station 30b, and a battery 12b and a battery 12c.
FIG. 12 is a schematic diagram for explaining control for allocating, in response to a demand, electrical power and electrical energy available to be provided, to a station 30c, and a battery 12d and a battery 12e.
FIG. 13 illustrates one example of change in consumption power over time caused by control of a station 30.
FIG. 14 is a flowchart showing procedures of processing executed by the system 100.
FIG. 15 illustrates an example of a computer 2000.

### DESCRIPTION OF EXEMPLARY EMBODIMENTS

Hereinafter, embodiments of the present invention will be explained. However, the following embodiments do not limit the invention according to the claims. In addition, some combinations of features explained in the embodiments may be unnecessary for the solving means of the invention.

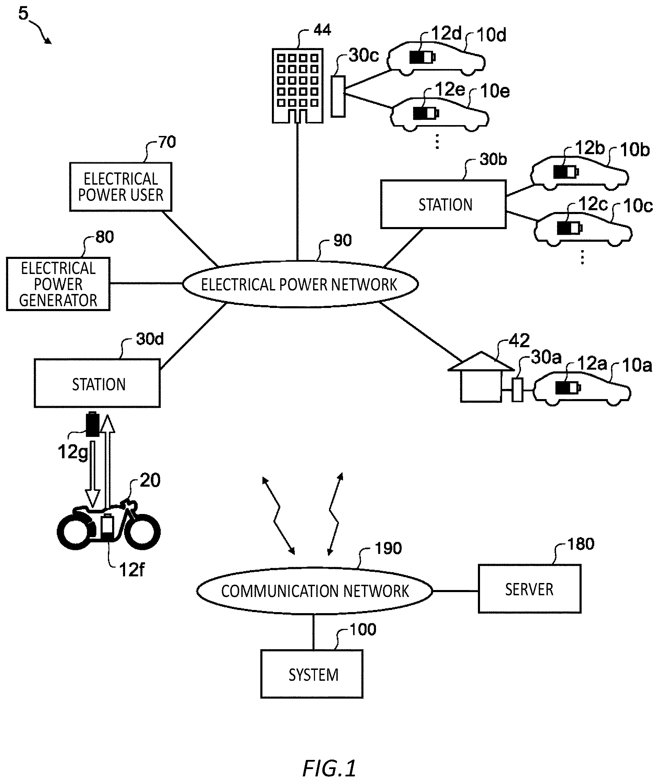

FIG. 1 illustrates an outline of a utilization form of an electrical power system 5 in one embodiment. The electrical power system 5 includes a station 30a, a station 30b, a station 30c, and a station 30d, an electrical power generator 80, a system 100, a server 180, and a vehicle 10a, a vehicle 10b, a vehicle 10c, a vehicle 10d, a vehicle 10e, and a vehicle 20.

In the present embodiment, the stations 30a, 30b, 30c, and 30d may be collectively referred to as a "station 30". The vehicles 10a, 10b, 10c, 10d, and 10e may be collectively referred to as a "vehicle 10". The vehicles 10a, 10b, 10c, 10d, and 10e include a battery 12a, a battery 12b, a battery 12c, a battery 12d, and a battery 12e, respectively. The batteries 12a, 12b, 12c, 12d, and 12e may be collectively referred to as a "battery 12".

The system 100 is connected to the server 180 via a communication network 190. The server 180 can communicate with the station 30 via the communication network 190. The system 100 controls the station 30 via the communication network 190. The system 100 communicates with the vehicle 10 via the communication network 190, and obtains various pieces of information on the vehicle 10 such as a travel record of the vehicle 10 or SOC of the battery 12.

The station 30, an electrical power user 70, and the electrical power generator 80 are connected to the electrical power network 90. The electrical power generator 80 includes a power plant operated by an electrical power company, for example. Electrical power generated by the electrical power generator 80 can be supplied to the station 30 and the electrical power user 70 via the electrical power network 90. The electrical power network 90 is an electrical power system, for example.

Each station 30 charges and discharges the battery 12 mounted on the vehicle 10 connected thereto, or put the charging/discharging on hold. The vehicle 10 is an electric vehicle, for example. The battery 12 is a battery for supplying the vehicle 10 with electrical power for travelling. The vehicle 10 may be a privately owned vehicle, a vehicle used by a businessman for his business, or a shared car. The battery 12 is one example of a movable battery. The battery 12 can be mounted on the vehicle 10 and be movable thereon.

The station 30a is provided at a private house 42, and charges and discharges the battery 12a of the vehicle 10a connected to the station 30a. The station 30b is a public charging/discharging station, and charges and discharges batteries 12 mounted on multiple vehicles 10 including the vehicle 10b and vehicle 10c connected to the station 30b. The station 30c is a station provided at a facility 44, and charges and discharges batteries 12 mounted on multiple vehicles 10 including the vehicle 10d and vehicle 10e connected to the station 30c.

The station 30d holds multiple movable batteries available to be mounted on vehicles 20, and charges and discharges the multiple movable batteries held therein. The vehicles 20 are electric motorcycles, for example. A battery 12f used by the vehicle 20 is exchanged at the station 30d. By way of example, the battery 12f used for travel of the vehicle 20 is exchanged for a battery 12g charged at the station 30d, which is then installed on the vehicle 20. The battery 12f and battery 12g are examples of movable batteries. The battery 12f and battery 12g can be movable by being mounted on the vehicles 20. The battery 12f and battery 12g can also be movable by being carried by one's hand.

Each station 30 can charge the battery 12 with electrical power supplied by the electrical power network 90. The station 30 can discharge the battery 12 and thereby supply the electrical power network 90 with power.

Each station 30 charges and discharges the battery 12 according to control of the system 100. For example, when the electrical power network 90 has insufficient power, the system 100 can cause electrical power to be supplied to the electrical power network 90 by causing the station 30 to discharge the battery 12. When the electrical power network 90 has surplus power, the system 100 can cause the surplus power of the electrical power network 90 to be reduced by causing the station 30 to charge a battery. The system 100 can provide a primary adjusting capability, a secondary adjusting capability, and a tertiary adjusting capability for the electrical power network 90 by using the station 30. As above, the system 100 can collectively manage multiple movable batteries 12 as an electrical power resource for the electrical power network 90.

The server 180 is used by an electricity aggregator, for example. The server 180 conducts electrical power trading in an electricity market. The system 100 can provide the server 180 with the batteries 12 managed as the electrical power resource. The system 100 controls charging/discharging of a battery, which is performed by the station 30, and provides the electrical power network 90 with an amount of electrical power contracted by the server 180. For example, in response to a demand from the server 180, the system 100 controls charging/discharging of the battery 12 which is performed by the station 30, and provides an amount of electrical power depending on the demand.

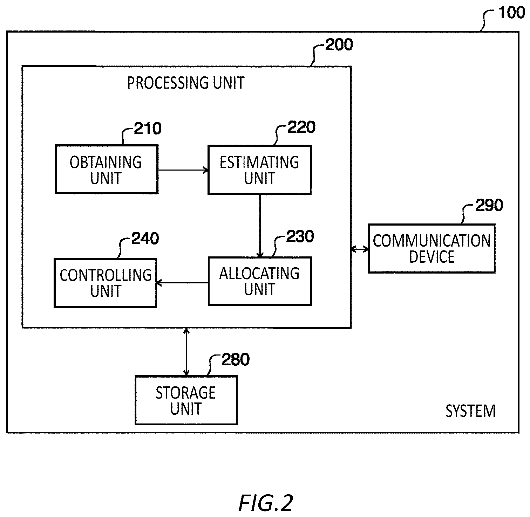

FIG. 2 illustrates one example of a system configuration of the system 100. The system 100 includes a processing unit 200, a storage unit 280, and a communication device 290.

The processing unit 200 controls the communication device 290. The communication device 290 performs communication between the station 30a and the server 180. The processing unit 200 is embodied as an arithmetic processing unit including a processor. Each storage unit 280 is embodied including a non-volatile storage medium. The processing unit 200 performs processing by using information stored in the storage unit 280. The processing unit 200 may be embodied as a microcomputer including a CPU, ROM, RAM, I/O, bus, and the like. The system 100 may be embodied as a computer.

In the present embodiment, it is assumed that the system 100 is embodied as a single computer. However, the system 100 may be embodied as multiple computers in another embodiment. At least a part of functions of the system 100 may be performed by one or more servers such as a cloud server.

The processing unit 200 includes an obtaining unit 210, an estimating unit 220, an allocating unit 230, and a controlling unit 240.

The obtaining unit 210 obtains a travel record of the vehicle 10, and a charging/discharging history of the battery 12. The obtaining unit 210 may obtain the travel record transmitted from the vehicle 10 to the system 100. The travel record of the vehicle 10 may contain information in which a location of the vehicle 10, and SOC and a date and time of the battery 12 are associated. The obtaining unit 210 may obtain the charging/discharging history transmitted from the vehicle 10 to the system 100. The obtaining unit 210 may also obtain a charging/discharging history of the battery 12 transmitted from the station 30. The charging/discharging history may contain information in which a charging/discharging amount and a date and time of the battery 12 are associated. The obtaining unit 210 may obtain information representing a current state of the vehicle 10. The current state of the vehicle 10 may include a current location of the vehicle 10, a current SOC of the battery 12, and the like. The estimating unit 220, allocating unit 230, and controlling unit 240 may perform processing based on the information obtained by the obtaining unit 210.

The system 100 controls charging of the battery 12, and power supply from the battery 12 to an outside. The controlling unit 240 provides the electrical power network 90 with an electrical power resource by performing: at least one of a first control for reducing a power charging amount for the battery 12, or a second control for increasing a power supplying amount from the battery 12, in response to a first request for requesting power consumption to be reduced; and at least one of a third control for increasing a power charging amount for the battery 12, or a fourth control for reducing a power supplying amount from the battery 12 to an outside, in response to a second request for requesting power consumption to be increased. The electrical power resource may be electrical power or electrical energy. Providing the electrical power network 90 with the electrical power resource does not only mean supplying the electrical power network 90 with electrical power, but also includes increasing electrical power demand of the electrical power network 90, and reducing electrical power demand of the electrical power network 90.

The estimating unit 220 estimates, based on a predicted usage situation of the battery 12, which of the first control, second control, third control, or fourth control can be used by each battery 12 to provide the electrical power network 90 with the electrical power resource. For example, the estimating unit 220 estimates, based on the predicted usage situation of the battery 12, an amount of electrical power resources that can be provided to the electrical power network 90 by the each battery 12 by using each of the first control, second control, third control, and fourth control.

The estimating unit 220 may estimate, based on a predicted usage situation of the battery 12, an amount of electrical power resources that can be provided to the electrical power network 90 by each battery 12 by using each of the first control, the second control, the third control, and the fourth control in each of multiple timeframes in the future. The estimating unit 220 may estimate, based on a target value of consumption power to be consumed by the battery 12 in every timeframe in the future, and a prediction of a charging/discharging amount of the battery 12 in the future, an electrical power resource required to be provided to the electrical power network 90 in each of multiple timeframes in the future.

The predicted usage situation of the battery 12 includes a timeframe in which the battery 12 is predicted to be used, for example. The predicted usage situation of the battery 12 may also include a predicted charging state of the battery 12. The estimating unit 220 may estimate the predicted usage situation of the battery 12 based on a usage history of the battery 12 in the past, and a usage plan of the battery 12 in the future.

The predicted usage situation of the battery 12 may include a timing at which the battery 12 is predicted to be charged or discharged. For a timing at which the battery 12 is predicted to be charged or discharged in a period in which the electrical power resource contracted in the electricity market should be provided to the electrical power network 90, the estimating unit 220 estimates an amount of electrical power resources available to be provided to the electrical power network 90 by changing the timing of the charging or discharging of the battery 12. Estimating in this way may permit the estimating unit 220 to estimate the amount of electrical power resources that can be provided to the electrical power network 90 by the each battery 12 by using each of the first control, second control, third control and fourth control.

The estimating unit 220 may allocate, based on an amount of electrical power resources available to be provided to the electrical power network 90 by each battery 12, and an amount of electrical power resources required to be provided to the electrical power network 90, by which of the first control, second control, third control, or fourth control, the electrical power resource is provided from the battery 12 to the electrical power network 90 in each timeframe within a period in which the electrical power resource contracted in the electricity market should be provided to the electrical power network 90. The controlling unit 240 may perform: at least one of the first control or the second control, in response to a first request being received within the period in which the electrical power resource should be provided to the electrical power network 90 and based on the amount of electrical power resources estimated by the estimating unit 220 as being available to be provided to the electrical power network 90; and at least one of the third control or the fourth control, in response to a second request being received within the period in which the electrical power resource should be provided to the electrical power network 90 and based on the amount of electrical power resources estimated by the estimating unit 220 as being available to be provided to the electrical power network 90.

The controlling unit 240 may perform at least one of: the first control or the second control, in response to the first request being received within the period in which the electrical power resource should be provided to the electrical power network 90 and based on the amount of electrical power resources estimated by the estimating unit 220 as being available to be provided to the electrical power network 90; and at least one of the third control or the fourth control, in response to the second request being received within the period in which the electrical power resource should be provided to the electrical power network 90 and based on the amount of electrical power resources estimated by the estimating unit 220 as being available to be provided to the electrical power network 90.

The allocating unit 230 allocates, based on an amount of electrical power resources available to be provided to the electrical power network 90 by each battery 12, and an amount of electrical power resources required to be provided to the electrical power network 90, by which of the first control, second control, third control, or fourth control, each battery 12 provides the electrical power network 90 with the electrical power resource in each of multiple timeframes in the future. For example, the allocating unit 230 may allocate an amount of electrical power resources to be provided to the electrical power network 90 by the each battery 12 by using any of the first control, second control, third control, and fourth control in each of the multiple timeframes in the future.

The allocating unit 230 may preferentially allocate, when allocating whether the each battery 12 provides the electrical power network 90 with an electrical power resource, the first control over the second control, and the fourth control over the third control. The allocating unit 230 may allocate, so as to bring a change in electrical charging power or discharging power of the battery 12 to be equal to or less than a predefined value, by which of the first control, second control, third control, or fourth control, the each battery 12 provides the electrical power network 90 with the electrical power resource in each of the multiple timeframes in the future.

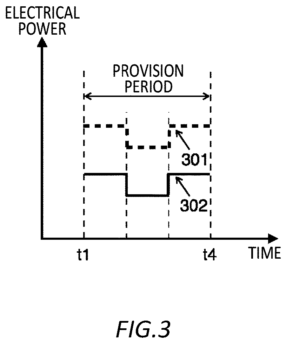

FIG. 3 is a graph schematically showing predicted electrical power 301 predicted to be consumed in a provision period, and a target electrical power 302. In the present embodiment, the "provision period" refers to a period in which electrical energy contracted in the electricity market should be provided. Provision periods shown from FIG. 3 to FIG. 12 are periods from time t1 to time t4.

The predicted electrical power 301 is an expected value of electrical power demand generated under management of the system 100. For example, the predicted electrical power 301 is a reference value of electrical power demand in every thirty minutes, which is used when trading in the electricity market. The target electrical power 302 is defined by subtracting electrical energy contracted in the electricity market from the predicted electrical power 301. The target electrical power 302 is consumption power that should be maintainable by the system 100 in order to ensure that the electrical power network 90 is provided with the electrical energy contracted in the electricity market.

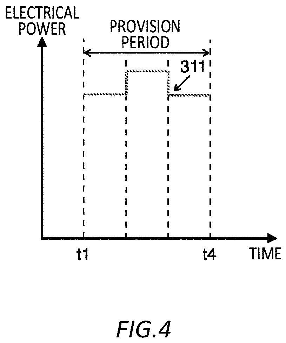

FIG. 4 is a graph schematically showing an estimated electrical power 311 in a provision period. The estimated electrical power 311 represents an estimation value of consumption power consumed by charging of the battery 12, which is controlled by the system 100. The estimated electrical power 311 may be estimated based on a charging plan of the battery 12 in the provision period in the future, prediction of vehicles 10 which enters or leaves the station 30, a history of charging/discharging amount of the battery 12 in every timeframe in the past, and the like. The estimated electrical power 311 is estimated by the estimating unit 220.

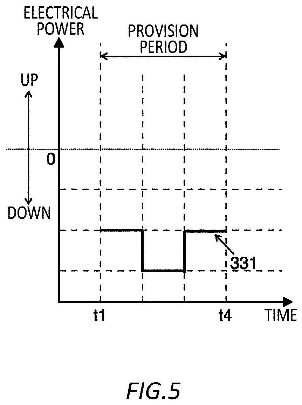

FIG. 5 is a graph schematically showing a required electrical power 331 required for the system 100 to secure in the provision period. The required electrical power 331 is calculated by subtracting the estimated electrical power 311 from the target electrical power 302. In FIG. 5, a vertical axis shows difference in electrical power. If a required electrical power is less than zero such as the required electrical power 331 shown in FIG. 5, it is indicated that consumption power may need to be reduced in response to down demand. If a required electrical power is more than zero, it is indicated that consumption power may need to be increased in response to an up demand.

The controlling unit 240 can provide the electrical power network 90 with electrical energy contracted in the electricity market in a provision period by adjusting a charging/discharging plan of the battery 12 in the future so that the required electrical power 331 can be provided.

The controlling unit 240 performs, if down demand for reducing electrical power demand, which is issued by the server 180 in a period where the required electrical power is less than zero, is received, either the first control or the second control in response to the down demand. In the first control, electrical power consumed by charging the battery 12 is reduced, and in the second control, overall consumption power is reduced by discharging the battery 12 and supplying power to an outside of the vehicle 10. The controlling unit 240 performs, if up demand for increasing electrical power demand, which is issued by the server 180 in a period where the required electrical power is more than zero, is received, either the third control or the fourth control in response to the up demand. In the third control, electrical power consumed for charging the battery 12 is increased, and in the fourth control, overall consumption power is increased by reducing power being discharged from the battery 12 and supplied to an outside of the vehicle 10.

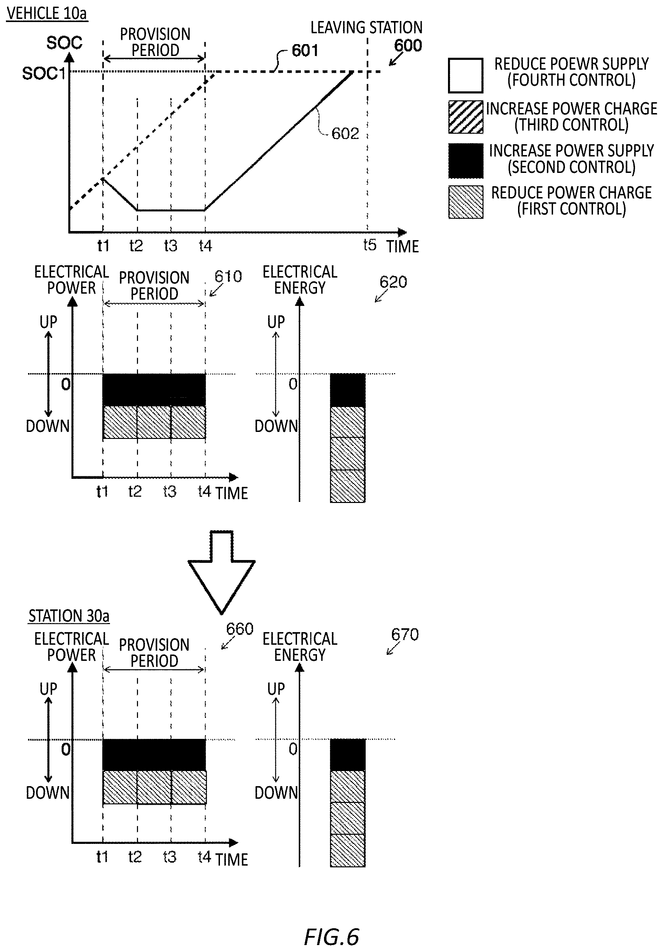

FIG. 6 is a diagram for explaining one example of a method of calculating an electrical power resource available to be provided by the vehicle 10. Here, an example case will be shown in which, there is a period of time required for charging the battery 12a from finishing time of the provision period until predicted leaving time of the vehicle 10a from the station. Explained below in regard to FIGs. 6 to 12 are cases in which, mainly the battery 12 of the vehicle 10 provides the electrical power resource to the electrical power network 90.

A line 601 of a graph 600 shows change in SOC over time based on a plan of charging/discharging the battery 12a of the vehicle 10a. A line 602 of the graph 600 shows one example of the change in SOC of the battery 12a over time when the plan of charging/discharging has been modified in order to provide the electrical power resource within the provision period.

The first control for not causing the battery 12a to be charged can be performed in all timeframes from time t1 to time t4. The second control for discharging the battery 12a and supplying power to an outside of the vehicle 10 can be performed in any timeframe from time t1 to time t4, as long as SOC is not excessively reduced. For example, SOC change shown with the line 602 represents a case in which the second control is performed from time t1 to time t2 while performing the first control in all timeframes from time t1 to time t4. When adapting to the case shown in FIG. 5 in which the down demand in a timeframe from time t2 to time t3 is especially large, the second control may be performed from time t2 to time t3 (which is omitted from illustration). Next, by starting to charge the battery 12a from time t4, the battery 12a can be charged until its SOC meets a target SOC1 before predicted leaving time t5 of the vehicle 10a from the station.

A graph 610 shows electrical power available to be provided from the battery 12a in each timeframe. As described above, reducing the power charging amount for the battery 12a by the first control can be executed in all timeframes from time t1 to time t4. The second control can be performed in any timeframe from time t1 to time t4. However, in this example, it is apparent from the line 602 that there is one timeframe available for executing the second control. As represented with square frames in the graph 610, the first control can be selected in all of three frames, and the second control can be selected in one of the three frames. In timeframes corresponding to these frames, electrical power for serving the down demand can be provided.

A graph 620 shows electrical energy available to be provided from the battery 12a. As described above, since the first control can be executed in all timeframes from time t1 to time t4, it can be represented with electrical power resources of three timeframes. The second control in the case of this example is represented with an electrical power resource of one timeframe.

A graph 660 shows electrical power available to be provided from the station 30a in each timeframe. The graph 670 shows electrical energy available to be provided from the station 30a. Because the station 30a can only be connected to one vehicle 10a, the graph 660 is identical to the graph 610, and the graph 670 is identical to the graph 620.

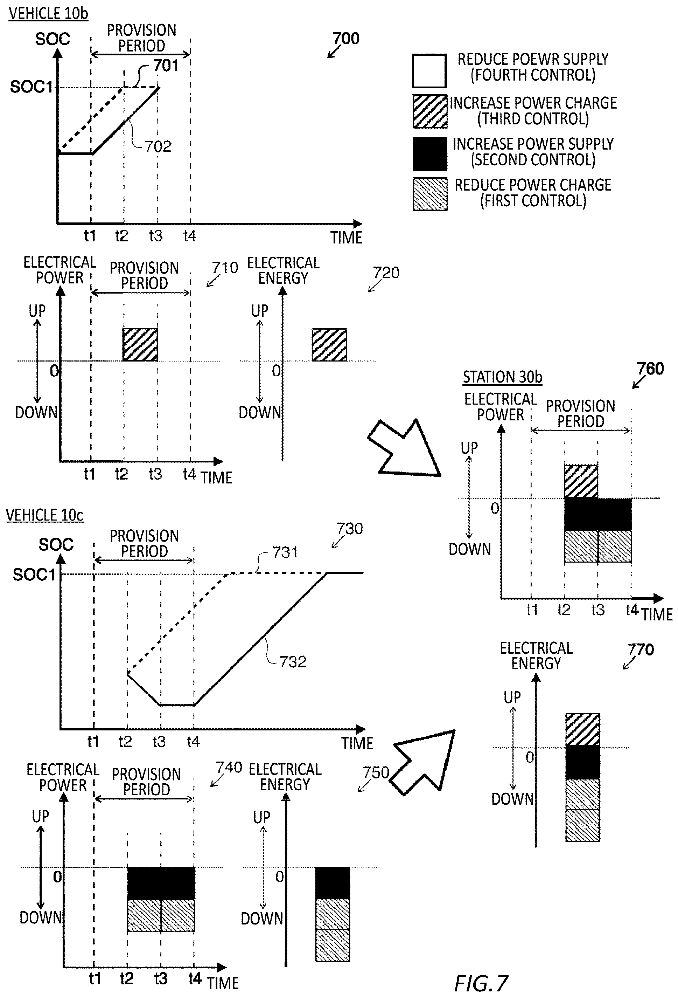

FIG. 7 is a diagram for explaining another example of the method of calculating an electrical power resource available to be provided by the vehicle 10. Here, a case will be shown in which, the vehicle 10b is predicted to leave from the station 30b at time t3 during the provision period, and the vehicle 10c is predicted to enter the station 30b at time t2 during the provision period.

A line 701 of a graph 700 shows change in SOC over time based on a plan of charging/discharging the battery 12b of the vehicle 10b. A line 702 of the graph 700 shows the change in SOC of the battery 12b over time when the plan of charging/discharging has been modified in order to provide the electrical power resource within the provision period. Here, it is assumed that in the plan of charging/discharging, charging of the battery 12b is scheduled to start before time t1.

Against this, as shown with the line 702, the battery 12b is charged by starting the charging of the battery 12b from time t1, and performing the third control from time t2 to time t3. In this way, a power charging amount can be increased from time t2 to time t3. Therefore, electrical power for responding to the up demand can be provided from the battery 12b.

A graph 710 shows electrical power available to be provided from the battery 12b in each timeframe. As described above, by performing the third control from time t2 to time t3, electrical power for responding to the up demand can be provided. Therefore, as shown with the graph 710, by performing the third control, a fixed amount of electrical power for responding to the up demand can be provided.

A graph 720 shows electrical energy available to be provided from the battery 12b. As described above, by performing the third control from time t2 to time t3, a fixed amount of electrical energy for responding to the up demand can be provided from the battery 12b.

A line 731 of a graph 730 shows change in SOC over time based on a plan of charging/discharging the battery 12c of the vehicle 10c. A line 732 of the graph 730 shows change in SOC of the battery 12c over time when the plan of charging/discharging has been modified in order to provide the electrical power resource within the provision period. Here, it is assumed that in the plan of charging/discharging, charging the battery 12b is scheduled to start from entering time t2 of the vehicle 10c into the station.

Against this, as shown with the line 732, by performing the second control for discharging the battery 12c and supplying power to an outside of the vehicle 10 while performing the first control for not charging the battery 12c from time t2 to time t3, electrical power for responding to the down demand can be provided from the battery 12c from time t2 to time t3. By performing the first control for not charging the battery 12c from the following time t3 to time t4, electrical power for responding to the down demand can be provided from time t3 to time t4. Next, by starting the charging of the battery 12c from time t4, the battery 12c of the vehicle 10c can be rapidly charged until its SOC meets a target SOC1.

A graph 740 shows electrical power available to be provided from the battery 12c in each timeframe. By performing the second control from time t2 to time t3 as described above, electrical power for responding to the down demand can be provided. Similarly, the second control can be performed from time t3 to time t4. As above, the second control can be performed in any fixed period from time t2 to time t4. A graph 740 illustrates an example of timeframes in which the second control can be performed. Further, by reducing a power charging amount for the battery 12c from time t2 to time t4 by using the first control as described above, electrical power for responding to the down demand can be provided as compared with the plan of charging/discharging shown with the line 731.

A graph 750 shows electrical energy available to be provided from the battery 12c. By performing the second control in a fixed period from time t2 to time t4 as described above, a fixed amount of electrical energy for responding to the down demand can be provided. In addition, by performing the first control from time t2 to time t4 as described above, electrical energy for responding to the down demand can be provided as shown with graph 750. As shown with the graph 750, the electrical energy available to be provided by performing the first control is electrical energy obtained by integrating electrical charging power that is reduced from time t2 to time t4.

A graph 760 shows electrical power available to be provided from the station 30b in each timeframe. A graph 770 shows electrical energy available to be provided from the station 30b. The graph 760 is obtained by adding the graph 710 to the graph 740. The graph 770 is obtained by adding the graph 720 to the graph 750.

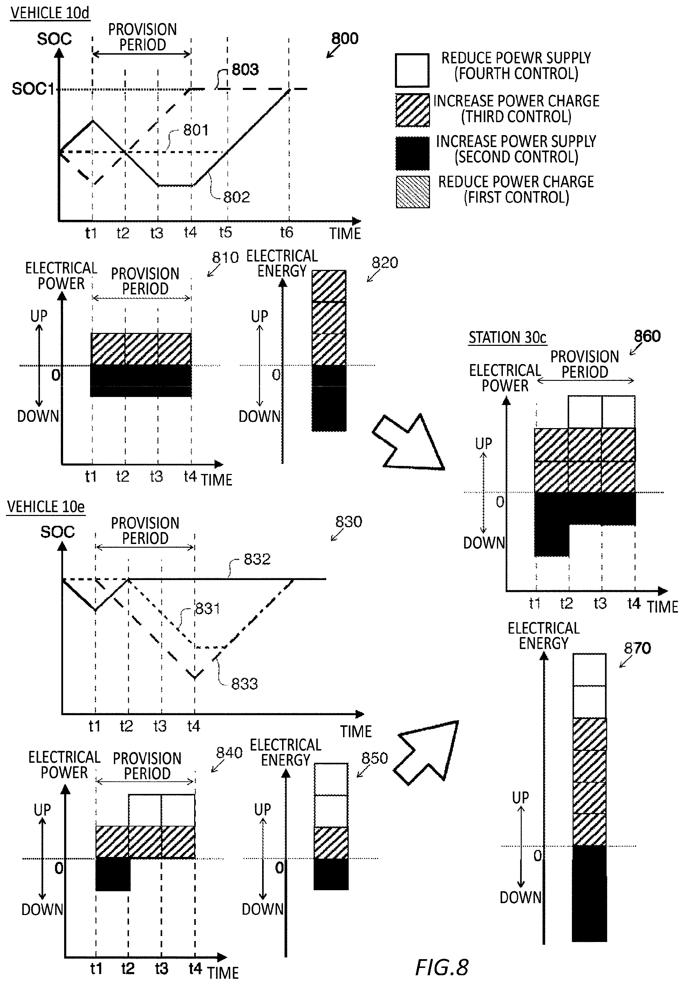

FIG. 8 is a diagram for explaining another example of the method of calculating an electrical power resource available to be provided by the vehicle 10. Here, it is assumed that there is no schedule of charging/discharging the battery 12d of the vehicle 10d within the provision period, and there is a schedule of performing timer charging on the battery 12d from time t5 to time t6. It is assumed that the vehicle 10e is scheduled to supply the facility 44 with power from time t2 to time t4.

A line 801 of a graph 800 shows change in SOC over time based on a plan of charging/discharging the battery 12d of the vehicle 10d. A line 802 of the graph 800 shows change in SOC of the battery 12d over time when the plan of charging/discharging has been modified in order to provide the electrical power resource in response to the first request within the provision period. A line 803 of the graph 800 shows change in SOC of the battery 12d over time when the plan of charging/discharging has been modified in order to provide the electrical power resource in response to the second request within the provision period.

As shown with the line 802, charging of the battery 12d starts before time t1, and the battery 12d is discharged by performing the second control from time t1 to time t3, then no charging/discharging are performed on the battery 12d from time t3 to time t4, and charging of the battery 12d starts from time t4 when the provision period ends. In this way, a power supplying amount from the battery 12d to an outside of the vehicle 10d can be increased from time t1 to time t3. Therefore, electrical power for responding to the down demand can be provided from the battery 12d.

As shown with the line 803, by starting the discharging of the battery 12d before time t1, and performing the third control from time t1 to time t4, the battery 12d is charged until its SOC meets a target SOC1. In this way, a power charging amount for the battery 12d can be increased from time t1 to time t4. Therefore, electrical power for responding to the up demand can be provided from the battery 12d.

A graph 810 shows electrical power available to be provided from the battery 12d in each timeframe. If performing the control shown with the line 802 in a way described above, electrical power for responding to the down demand can be provided by performing the second control in a period of two timeframes from time t1 to time t3. The second control can be performed in a period of two timeframes from time t2 to time t4. As above, the second control can be performed in a period of any two timeframes out of three timeframes from time t1 to time t4. If performing the control shown with the line 803, by performing the third control from time t1 to time t4, electrical power for responding to the up demand can be provided. Therefore, as shown with the graph 810, by performing the second control, a fixed amount of electrical power for responding to the down demand can be provided, and also by performing the third control, electrical power for responding to the up demand can be provided.

A graph 820 shows electrical energy available to be provided from the battery 12d. By performing the second control in a fixed period from time t1 to time t4 as described above, electrical energy for responding to the down demand can be provided from the battery 12d. In addition, by performing the third control from time t1 to time t4, a fixed amount of electrical energy for responding to the up demand can be provided. As shown with the graph 820, the electrical energy available to be provided by performing the third control is electrical energy obtained by integrating electrical charging power that is used from time t1 to time t4. Also, the electrical energy available to be provided by performing the second control is electrical energy obtained by integrating electrical power supplied in the fixed period from time t1 to time t4 for performing the second control.

A line 831 of a graph 830 shows change in SOC over time based on a plan of charging/discharging the battery 12e of the vehicle 10e. As shown with the line 831, it is scheduled to discharge the battery 12e from time t2 to time t4 and supply the facility 44 with electrical power. A line 832 of the graph 830 shows change in SOC of the battery 12c over time when the plan of charging/discharging has been modified in order to provide the electrical power resource within the provision period. A line 833 of the graph 830 shows change in SOC of the battery 12e over time when the plan of charging/discharging has been modified with a different form in order to provide the electrical power resource within the provision period.

As shown with the line 832, the battery 12e is charged by discharging the battery 12e before time t1, and executing the third control from time t1 to time t2. In this way, a power charging amount can be increased from time t1 to time t2. Therefore, electrical power for responding to the up demand can be provided from the battery 12e. In addition, by performing the fourth control from time t2 to time t4 and thereby not supplying power to the facility 44, electrical power for responding to the up demand can be provided from the battery 12e.

By way of control in another form, as shown with the line 833, by discharging the battery 12e from time t1 to time t4 and thereby performing the second control from time t1 to time t2, a power supplying amount from the battery 12e can be increased. Therefore, electrical power for responding to the down demand can be provided from the battery 12e.

A graph 840 shows electrical power available to be provided from the battery 12e in each timeframe. As described above, by performing the third control from time t1 to time t2, electrical power for responding to the up demand can be provided. Similarly, the third control can be performed from time t2 to time t3 or from time t3 to time t4. Therefore, the third control can be performing in any fixed period from time t1 to time t4. Therefore, as shown with the graph 840, by performing the third control, a fixed amount of electrical power for responding to the up demand can be provided from time t1 to time t4. Further, by reducing a power supplying amount from the battery 12e from time t2 to time t4 by using the fourth control as described above, electrical power for responding to the up demand can be provided as compared with the plan of charging/discharging shown with the line 831.

A graph 850 shows electrical energy available to be provided from the battery 12e. By performing the third control in a fixed period from time t1 to time t4 as described above, a fixed amount of electrical energy for responding to the up demand can be provided. In addition, by performing the fourth control from time t2 to time t4 as described above, electrical energy for responding to the up demand can be provided as shown with graph 850. As shown with the graph 850, the electrical energy available to be provided by performing the fourth control is electrical energy obtained by integrating electrical charging power that is reduced from time t2 to time t4. In addition, by performing the second control from time t1 to time t2 as described above, electrical energy for responding to the down demand can be provided.

A graph 860 shows electrical power available to be provided from the station 30c in each timeframe. The graph 870 shows electrical energy available to be provided from the station 30c. The graph 860 is obtained by adding the graph 810 to the graph 840. The graph 870 is obtained by adding the graph 820 to the graph 850.

Note that, the estimating unit 220 may estimate, based on a travel record of the vehicle 10 in the past and an action plan input by a user, leaving time of the vehicle 10 from the station 30 and entering time of the vehicle 10 into the station 30. The estimating unit 220 may estimate, based on a charging/discharging history of the battery 12 in the past and a travel record of the vehicle 10, SOC of the battery 12 of the vehicle 10 at a time of entering the station and SOC of the battery 12 of the vehicle 10 at a time of leaving the station. The estimating unit 220 may estimate, provided that SOC of the battery 12 of the vehicle 10 at a time of leaving the station can meet a target SOC, electrical power and electrical energy available to be provided by each battery 12.

The obtaining unit 210 may obtain preference information representing whether a user of the vehicle 10 prefers that the battery 12 provides electrical power in response to a demand. The estimating unit 220 may estimate, based on the preference information, electrical power and electrical energy available to be provided by the battery 12. For example, the estimating unit 220 may exclude a battery 12 of a vehicle 10 associated with a user who does not prefer that the battery 12 provides electrical power in response to a demand, from batteries 12 for responding to the demand.

The obtaining unit 210 may obtain specification information on the battery 12 and the station 30. The specification information may include: information representing electrical power available for the battery 12 to charge/discharge; information representing whether discharging from the battery 12 to the vehicle 10 is available; information representing electrical power available for the station 30 to charge/discharge; information representing whether the station 30 can supply power from the battery 12 to the electrical power network 90; and the like. The estimating unit 220 may estimate, based on the specification information and within ranges of specifications of the battery 12 and the station 30, electrical power and electrical energy available to be provided by the battery 12.

The obtaining unit 210 may obtain state information on the battery 12. The state information may include information representing deterioration degree of the battery 12, capacity of the battery 12, and temperature dependence of output power. The estimating unit 220 may estimate, based on the state information on the battery 12, electrical power and electrical energy available to be provided by the battery 12. For example, the estimating unit 220 may preferentially select a battery 12 of which deterioration degree is lower as a battery 12 being available for responding to a demand. The estimating unit 220 may exclude a battery 12 of which deterioration degree is lower than a predefined value from batteries 12 for responding to a demand.

In order to reduce progress of deterioration of the battery 12 and the station 30, which may be caused by responding to a demand, the estimating unit 220 may set restrictions on an upper value and lower value of SOC of the battery 12, and a charging/discharging amount of the battery 12, and estimate electrical power and electrical energy available to be provided by the battery 12. The estimating unit 220 may determine, by taking a financial advantage to a user of the vehicle 10 into account, and thus based on an electricity rate that may be incurred by charging the battery 12 and a reward which can be obtained by the user associated with the vehicle 10 by responding to a demand, whether to cause the battery 12 of the vehicle 10 to respond to the demand. For example, the estimating unit 220 may determine not to cause the battery 12 to respond to the demand when the electricity rate is higher than the reward.

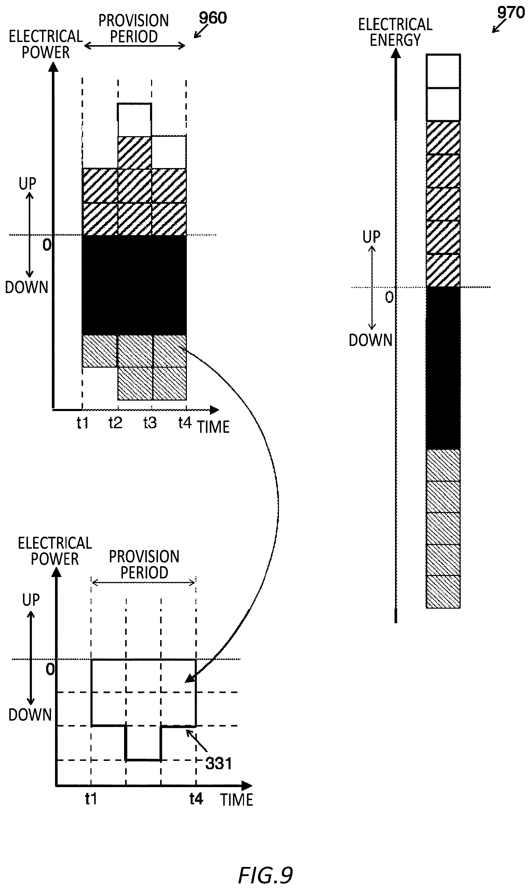

FIG. 9 schematically illustrates total electrical power and a total electrical energy available to be provided by all stations 30. A graph 960 shows the total electrical power available to be provided from the all stations 30 in each timeframe. A graph 970 shows the total electrical energy available to be provided from a station 30. The graph 960 is obtained by adding the graph 660, graph 760, and graph 860. The graph 970 is obtained by adding the graph 670, graph 870, and graph 870.

The required electrical power 331 in FIG. 5 shows the electrical power required for the system 100 to secure in every timeframe in order to respond to a demand in the provision period. As shown with FIG. 9, the allocating unit 230 allocates the total electrical power available to be provided, which is shown in FIG. 9, to the required electrical power 331 so that the required electrical power 331 becomes available to be provided. Specifically, the allocating unit 230 allocates from which station 30 the required electrical power 331 is provided, and form which battery 12 the required electrical power 331 is provided.

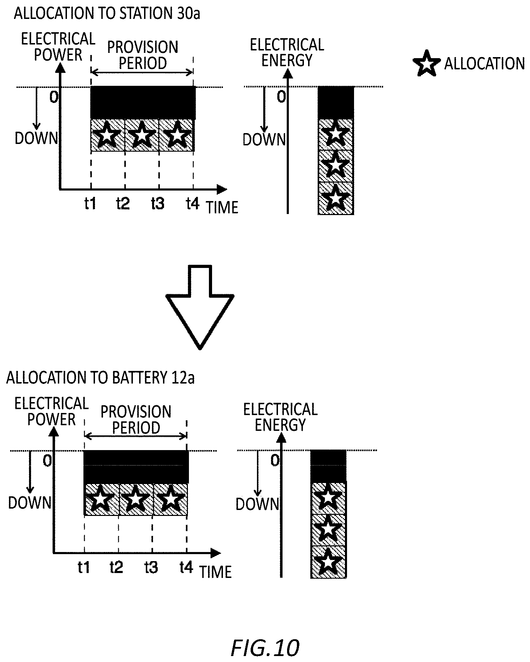

Explained below in regard to FIGs. 10 to 12 is control for allocating, in response to a demand, electrical power and electrical energy available to be provided, to the station 30 and the battery 12. Because responding to the up demand is not required in the example of the required electrical power 331 shown in FIG. 5, the following descriptions in regard to FIGs. 10 to 12 only describe about the down demand.

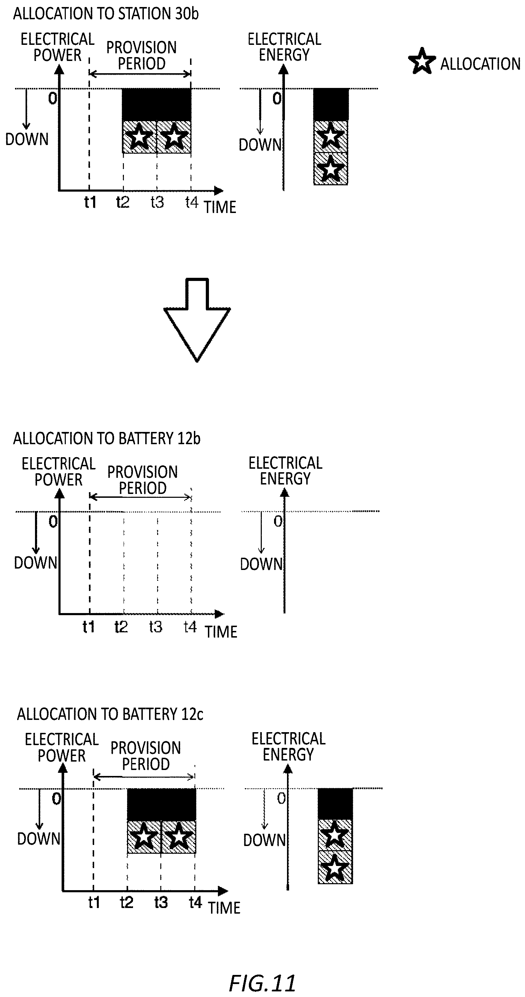

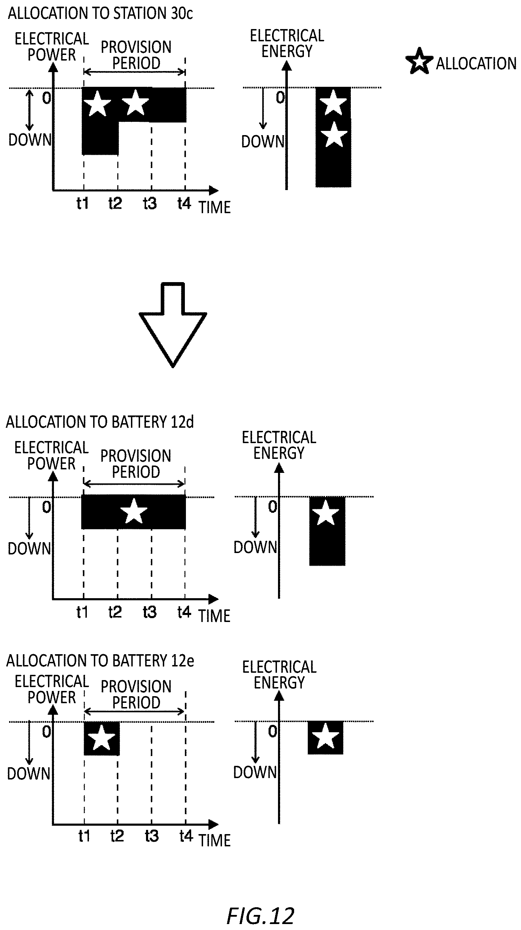

FIG. 10 is a schematic diagram for explaining control for allocating, in response to a demand, electrical power and electrical energy available to be provided, to the station 30a and the battery 12a. FIG. 11 is a schematic diagram for explaining control for allocating, in response to a demand, electrical power and electrical energy available to be provided, to the station 30b, and the battery 12b and battery 12c. FIG. 12 is a schematic diagram for explaining control for allocating, in response to a demand, electrical power and electrical energy available to be provided, to the station 30c, and the battery 12d and battery 12e.

The allocating unit 230 allocates from which of the station 30 among the station 30a, station 30b, or station 30c, electrical power for providing required electrical power is provided. In order to reduce deterioration of a battery and a charging device, the allocating unit 230 gives priority to reducing power charging by the first control and reducing power supply by the fourth control over increasing power supply by the second control and increasing charging by the third control. Further, the allocating unit 230 allocates from which station 30 electrical power for providing the required electrical power 331 is provided, in a manner that the providing is performed with 80% or less of electrical energy available to be provided by each station 30. The allocating unit 230 allocates electrical power provided by each battery 12 in every timeframe, in a way that change in electrical charging power and supplying electrical power over time is less than a predefined value.

The allocating unit 230 may allocate, in an order from a timeframe having a least ratio of electrical power available to be supplied for the required electrical power 331, from which station 30 and battery 12 the required electrical power is provided. For example, as shown with FIG. 9, in the timeframe from time t2 to time t3, electrical power of approximately 1.67 times the required electrical power 331 is available to be provided, in the timeframe from time t1 to time t2, electrical power of twice the required electrical power 331 is available to be provided, and in the timeframe from time t3 to time t4, electrical power of 2.5 times the required electrical power 331 is available to be provided. In this case, it may be allocated that from which station 30 and battery 12 the required electrical power is provided in the timeframe from time t2 to time t3, then it may be allocated that from which station 30 and battery 12 the required electrical power is provided in the timeframe from time t1 to time t2, and finally it may be allocated that from which station 30 and battery 12 the required electrical power is provided in the timeframe from time t3 to time t4. The allocating unit 230 may preferentially allocate a station 30 and a battery 12 which can provide a largest amount, as the station 30 and battery 12 from which the required electrical power should be provided.

As shown with FIGs. 10 and 11, total electrical power available to be provided from the station 30a by the first control, and total electrical power available to be provided from the station 30b by the first control are preferentially allocated. Specifically, total electrical power available to be provided from the battery 12a by the first control, and total electrical power available to be provided from the battery 12c by the first control are preferentially allocated. Next, the allocating unit 230 allocates a part of electrical power available to be provided from the station 30c by the second control. Specifically, a part of electrical power available to be provided from the battery 12d by the second control, and a part of electrical power available to be provided from the battery 12e by the second control are allocated. In this way, the allocating unit 230 can preferentially allocate electrical power available to be provided by the first control, in a manner that the electrical energy to be allocated from the station 30a, station 30b, and station 30c is composed of 80% or less of their available electrical power.

Explained above in regard to FIGs. 6 to 12 were cases in which, mainly the battery 12 mounted on the vehicle 10 provides the electrical power resource for the electrical power network 90. However, also in a case in which batteries for vehicles 20 including the battery 12f and the battery 12g provide an electrical power resource for the electrical power network 90, processing similar to the processing for the battery 12 explained in regard to FIGs. 6 to 12 can be performed. For example, electrical power available to be provided for the electrical power network 90 by a battery for a vehicle 20 can be estimated based on: a charging/discharging history of the battery 12 in the past performed by the station 30d; SOC of the battery for the vehicle 20 when this battery is returned to the station 30d; and a history of exchanging the battery 12 in the station 30d, and it can be allocated that by which of the first control, second control, third control, or fourth control of the battery for the vehicle 20 provides electrical power for the electrical power network 90.

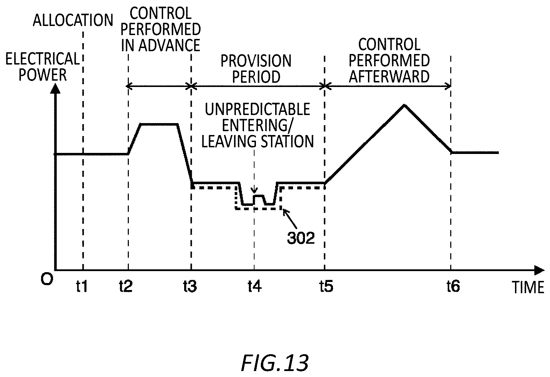

FIG. 13 illustrates one example of change in consumption power over time caused by control of the station 30. In FIG. 13, a provision period is from time t3 to time t5.

At time t1, the allocating unit 230 allocates from which station 30 and battery 12 required electrical power is provided in the provision period. The allocating unit 230 may allocate at a timing prior to starting time of the provision period by a predefined period of time. The allocating unit 230 may allocate, in a day including the provision period, at a predefined time before starting time of the provision period.

At time t2 before the starting time of the provision period, the controlling unit 240 controls charging/discharging of the battery 12 in advance so that required electrical power can be provided from the battery 12 in the provision period. For example, the controlling unit 240 causes, if there is a possibility of reducing consumption power depending on a down demand within the provision period, the battery 12 to be charged in advance. Control of causing the battery 12 to be charged before the starting time of the provision period, such as that shown with the line 802 in FIG. 8, falls within the control performed in advance.

In the provision period, the controlling unit 240 controls charging/discharging of the battery 12 by controlling the station 30 depending on a demand. At this time, the controlling unit 240 controls the charging/discharging of the battery 12 based on a result of allocation executed by the allocating unit 230. If consumption power increases due to a vehicle 10 unpredictably entering or leaving the station at time t4, the controlling unit 240 selects, among batteries 12 not allocated by the allocating unit 230 as a battery 12 for providing required electrical power, a battery 12 that can provide electrical power for serving the increased consumption power, and provides electrical power for serving the increased consumption power by performing the first control or the second control on the selected battery 12.

Once the provision period ends at time t5, the controlling unit 240 controls charging/discharging of the battery 12 in order to recover the required electrical power provided by the battery 12 in the provision period. For example, the controlling unit 240 causes, if the consumption power is reduced in response to a down demand within the provision period, the battery 12 to be charged after the provision period. For example the controlling unit 240 causes, as shown with the line 802 in FIG. 8, the battery 12 to be charged before the starting time of the provision period. Control of causing the battery 12 to be charged after the provision period, such as that shown with the line 602 in FIG. 6, falls within control performed afterward. At this time, it is desirable that the controlling unit 240 controls charging/discharging of the battery 12 such that change in consumption power over time after the provision period is less than a predefined value.

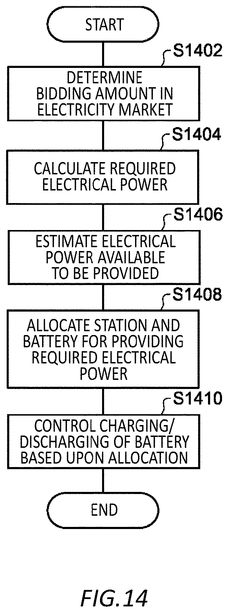

FIG. 14 is a flowchart showing procedures of processing executed by the system 100. In S1402, the estimating unit 220 determines a bidding amount for the electricity market. For example, the estimating unit 220 estimates, by using a prediction model for estimating electrical power and electrical energy available to be provided in response to a demand, the electrical power and the electrical energy available to be provided, and determines the bidding amount based on the estimated electrical power and electrical energy. The prediction model may be generated in advance based on a charging/discharging history of a battery 12 in the past. For example, the prediction model may be generated by machine learning using electrical power and electrical energy available to be provided in every timeframe, which is calculated based on a charging/discharging history of the battery 12 in the past. The prediction model may use a point of time information as an input, and output an estimation value of electrical power and electrical energy available to be provided at a point of time shown with the point of time information that is input. The input for the prediction model may include any one of: a day of the week information; weekday/weekend distinction information; season information; and timeframe information. The input for the prediction model may further include at least one of temperature information or weather information.

In S1404, the estimating unit 220 estimates required electrical power. For example, as explained in regard to FIG. 3, the estimating unit 220 may calculate target electrical power based on electrical power contracted in an electricity market, and estimate the required electrical power from a difference between the target electrical power and an estimated electrical power.

In S1406, electrical power available to be provided by a station 30 and a battery 12 is estimated. For example, the estimating unit 220 estimates, by using the method explained in regard to FIGs. 6 to 8, electrical power and electrical energy available to be provided by a station 30 and each battery 12 by using each of the first control, second control, third control, and fourth control.

In S1408, the allocating unit 230 allocates a station 30 and a battery 12 for providing the required electrical power. For example, the allocating unit 230 allocates, by using the method explained in regard to FIGs. 9 to 12, the station 30 and the battery 12 for providing the required electrical power. In S1410, the controlling unit 240 controls charging/discharging of the battery 12 based on the allocation result obtained in 1408 and a demand.

As explained above, according to the system 100, by taking a usage prediction on the vehicle 10 and the battery 12 into account, electrical power and electrical energy available to be provided by each battery 12 can be estimated with high accuracy. Further according to the system 100, based on the electrical power and the electrical energy available to be provided by the each battery 12, a battery 12 for providing electrical power depending on a demand can be allocated, and also electrical power and electrical energy which should be provided by each battery 12 in every timeframe can be allocated to each battery 12. Conventionally, it has been uneasy to predict electrical energy available to be provided by a battery mounted on a mobile object in advance because the battery mounted on the mobile object may be disengaged from the electrical power network 90 in irregular timeframes. Therefore, it has been required to secure an extra number of auxiliary batteries in order to use batteries mounted on the mobile object for adjusting power supply and demand of the electrical power network 90. Against this, according to the control performed by the system 100 described above, it is possible to provide the electrical power network 90 with more electrical power by using a fewer number of batteries 12.

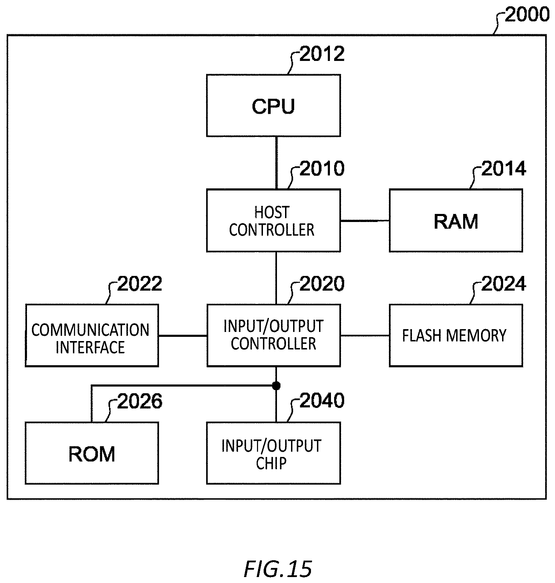

FIG. 15 shows an example of a computer 2000 in which multiple embodiments of the present invention can be entirely or partially embodied. A program installed in the computer 2000 can cause the computer 2000 to: function as a system or each unit of the system according to the embodiments, or a device of various types of control devices etc. or each unit of the device; execute operations associated with the system or the each unit of the system, or the device or each unit of the device; and/or execute processes according to the embodiments or stages of these processes. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with other electronic devices via a network. The flash memory 2024 stores a program and data used by the CPU 2012 in the computer 2000. The ROM 2026 stores a boot program or the like executed by the computer 2000 during activation, and/or a program depending on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer-readable storage medium such as a CD-ROM, a DVD-ROM, or a memory card. The RAM 2014, the ROM 2026, or the flash memory 2024 is an example of the computer-readable storage medium. The program is installed in the flash memory 2024, the RAM 2014 or the ROM 2026 and executed by the CPU 2012. Information processing written in these programs is read by the computer 2000, and provides cooperation between the programs and the various types of hardware resources described above. A device or a method may be actualized by executing operations or processing of information depending on a use of the computer 2000.

For example, when communication is executed between the computer 2000 and an external device, the CPU 2012 may execute a communication program loaded in the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 to be read into the RAM 2014, and execute various types of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various types of processing including various types of operations, information processing, conditional judgement, conditional branching, unconditional branching, information retrieval/replacement, or the like described in this specification and specified by instruction sequences of the programs, and write back a result into the RAM 2014. In addition, the CPU 2012 may search for information in a file, a database, or the like in the recording medium. For example, when multiple entries, each having an attribute value of a first attribute associated with an attribute value of a second attribute, is stored in the recording medium, the CPU 2012 may search for an entry having a designated attribute value of the first attribute that matches a condition from the multiple entries, and read the attribute value of the second attribute stored in the entry, thereby obtaining the attribute value of the second attribute associated with the first attribute that satisfies a predefined condition.

The programs or software modules explained above may be stored in the computer-readable storage medium on the computer 2000 or in the vicinity of the computer 2000. A recording medium such as a hard disk or a RAM provided in a server system connected to a dedicated communication network or the Internet can be used as the computer-readable storage medium. A program stored in the computer-readable storage medium may be provided to the computer 2000 via a network.

A program that is installed in the computer 2000 and causes the computer 2000 to function as the system 100 may work on the CPU 2012 and the like to cause the computer 2000 to function as each unit of the system 100, respectively. Information processing described in these programs is read into the computer 2000 and then functions as each unit of the system 100, which is a concrete means obtained from cooperation of software and the various types of hardware resources described above. Then, by using these concrete means for computing or processing information depending on an intended use of the computer 2000 in the present embodiment, a particular system 100 is formed depending on the intended use.

Various embodiments have been explained with reference to the block diagrams and the like. In the block diagrams, each block may represent (1) a stage of a process in which an operation is executed, or (2) each unit of the device having a role in executing the operation. A specific stage and unit may be implemented by a dedicated circuit, a programmable circuit supplied with computer-readable instructions stored on a computer-readable storage medium, and/or a processor supplied with computer-readable instructions stored on a computer-readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and other logical operations, and a memory element such as a flip-flop, a register, a field programmable gate array (FPGA), a programmable logic array (PLA), or the like.

The computer-readable storage medium may include any tangible device capable of storing instructions to be executed by an appropriate device. Thereby, the computer-readable storage medium having instructions stored therein forms at least a part of a product including instructions which can be executed to provide means for executing processing procedures or operations specified in the block diagrams. An example of the computer-readable storage medium may include an electronic storage medium, a magnetic storage medium, an optical storage medium, an electromagnetic storage medium, or a semiconductor storage medium. A more specific example of the computer-readable storage medium may include a floppy (registered trademark) disk, a diskette, a hard disk, a random-access memory (RAM), a read-only memory (ROM), an erasable programmable read-only memory (EPROM or flash memory), an electrically erasable programmable read-only memory (EEPROM), a static random-access memory (SRAM), a compact disc read-only memory (CD-ROM), a digital versatile disc (DVD), a Blu-ray (registered trademark) disc, a memory stick, or an integrated circuit card.

The computer-readable instruction may include an assembler instruction, an instruction-set-architecture (ISA) instruction, a machine instruction, a machine dependent instruction, a microcode, a firmware instruction, state-setting data, or either of source code or object code written in any combination of one or more programming languages including an object oriented programming language such as Smalltalk (registered trademark), JAVA (registered trademark), and C++, and a conventional procedural programming language such as a "C" programming language or a similar programming language.

Computer-readable instructions may be provided to a processor of a general purpose computer, a special purpose computer, or other programmable data processing device, or to programmable circuit, locally or via a local area network (LAN), wide area network (WAN) such as the Internet, and a computer-readable instruction may be executed to provide means for executing operations specified in the explained processing procedures or block diagrams. An example of the processor includes a computer processor, processing unit, microprocessor, digital signal processor, controller, microcontroller, or the like.

While the embodiments of the present invention have been explained, the technical scope of the present invention is not limited to the above-described embodiments. It is apparent to persons skilled in the art that various alterations or improvements can be added to the above-described embodiments. It is also apparent from the description of the claims that the embodiments to which such alterations or improvements are made can also fall within the technical scope of the present claims.

The operations, procedures, steps, and stages etc. of each process performed by a device, system, program, and method shown in the claims, specification, or diagrams can be executed in any order as long as the order is not indicated by "before", "prior to", or the like and as long as the output from a previous process is not used in a later process. Even if the operation flow is explained using phrases such as "first" or "next" in the claims, specification, or drawings, it does not necessarily mean that the process must be performed in this order.

SOLUTION: A system including: a controlling unit for providing an electrical power network with an electrical power resource by performing, at least one of a first control for reducing power charging amounts for the multiple movable batteries, or a second control for increasing power supplying amounts from the multiple movable batteries, in response to a first request for requesting power consumption to be reduced, and at least one of a third control for increasing power charging amounts for the multiple movable batteries, or a fourth control for reducing power supplying amounts from the multiple movable batteries to outsides, in response to a second request for requesting power consumption to be increased; and an allocating unit for allocating, based on an amount of electrical power resources available to be provided to the electrical power network by each of the multiple movable batteries, and an amount of electrical power resources required to be provided to the electrical power network, by which of the first control, the second control, the third control, or the fourth control, the each of the multiple movable batteries provides the electrical power network with an electrical power resource in each of multiple timeframes in a future.

### EXPLANATION OF REFERENCES

5: electrical power system;
10: vehicle;
20: vehicle;
42: private house;
44: facility;
12: battery;
30: station;
70: electrical power user;
80: electrical power generator;
90: electrical power network;
180: server;
190: communication network;
200: processing unit;
210: obtaining unit;
220: estimating unit;
230: allocating unit;
240: controlling unit;
280: storage unit;
290: communication device;
301: predicted electrical power;
302: target electrical power;
311: estimated electrical power;
331: required electrical power;
100: system;
2000: computer;
2010: host controller;
2012: CPU;
2014: RAM;
2020: input/output controller;
2022: communication interface;
2024: flash memory;
2026: ROM;
2040: input/output chip.

## Claims

1. A system (100) configured to control charging of multiple movable batteries (12), and power supply from the multiple movable batteries (12) to outsides, comprising:
a controlling unit (240) for providing an electrical power network with an electrical power resource by performing,
at least one of a first control for reducing power charging amounts for the multiple movable batteries (12), or a second control for increasing power supplying amounts from the multiple movable batteries (12) to outsides, in response to a first request for requesting power consumption to be reduced, and
at least one of a third control for increasing power charging amounts for the multiple movable batteries (12), or a fourth control for reducing power supplying amounts from the multiple movable batteries (12) to outsides, in response to a second request for requesting power consumption to be increased; and
an allocating unit (230) for allocating, based on an amount of electrical power resources available to be provided to the electrical power network by each of the multiple movable batteries (12), and an amount of electrical power resources required to be provided to the electrical power network, by which of the first control, the second control, the third control, or the fourth control, the each of the multiple movable batteries (12) provides the electrical power network with an electrical power resource in each of multiple timeframes in a future, **characterised by**
if consumption power increases in the multiple timeframes, the controlling unit (240) is configured to select, among the multiple movable batteries not allocated by the allocating unit (230), a movable battery that can provide electrical power for serving the increased consumption power, and provide electrical power for serving the increased consumption power, and
the controlling unit (240) is configured to control, based on the allocating, a station that charges and discharges the movable batteries (12).

2. The system (100) according to claim 1, further comprising:
an estimating unit (220) for estimating, based on predicted usage situations of the multiple movable batteries (12), an amount of electrical power resources that can be provided to the electrical power network by the each of the multiple movable batteries (12) by using each of the first control, the second control, the third control, and the fourth control in the each of multiple timeframes in the future.

3. The system (100) according to claim 2, wherein the estimating unit (220) is configured to estimate, based on target values of consumption power to be consumed by the multiple movable batteries (12) in every timeframe in a future, and predictions of charging/discharging amounts of the multiple movable batteries (12) in a future, an electrical power resource required to be provided to the electrical power network in the each of multiple timeframes in the future.

4. The system (100) according to any one of claims 1 to 3, wherein the allocating unit (230) is configured to allocate an amount of electrical power resources to be provided to the electrical power network by the each of the multiple movable batteries (12) by using any of the first control, the second control, the third control, and the fourth control in each of multiple timeframes in a future.

5. The system (100) according to any one of claims 1 to 4, wherein the allocating unit (230) is configured to preferentially allocate, when allocating whether the each of the multiple movable batteries (12) provides the electrical power network with an electrical power resource, the first control over the second control, and the fourth control over the third control.

6. The system (100) according to any one of claims 1 to 5, wherein the allocating unit (230) is configured to allocate, so as to bring changes in electrical charging power or discharging power of the multiple movable batteries (12) to be equal to or less than predefined values, by which of the first control, the second control, the third control, or the fourth control, the each of the multiple movable batteries (12) provides the electrical power network with an electrical power resource in each of multiple timeframes in a future.

7. The system (100) according to claim 2, wherein:
the estimating unit (220) is configured to allocate, based on an amount of electrical power resources available to be provided to the electrical power network by the each of the multiple movable batteries (12), and an amount of electrical power resources required to be provided to the electrical power network, by which of the first control, the second control, the third control, or the fourth control, the each of the multiple movable batteries (12) provides the electrical power network with an electrical power resource in each of multiple timeframes within a period in which an electrical power resource contracted in an electricity market should be provided to the electrical power network; and
the controlling unit (240) is configured to perform,
at least one of the first control or the second control, in response to the first request being received within the period in which the electrical power resource should be provided to the electrical power network and based on an amount of electrical power resources estimated by the estimating unit (220) as being available to be provided to the electrical power network, and
at least one of the third control or the fourth control, in response to the second request being received within the period in which the electrical power resource should be provided to the electrical power network and based on an amount of electrical power resources estimated by the estimating unit (220) as being available to be provided to the electrical power network.

8. The system (100) according to any one of claims 1 to 7, wherein the multiple movable batteries (12) include batteries mounted on vehicles (10).

9. The system (100) according to claim 8, wherein the multiple movable batteries (12) include batteries that are mounted on the vehicles (10) and exchangeable at multiple stations, and
the allocating unit (230) is configured to allocate, based on a history of exchanging the batteries in the multiple stations, by which of the first control, the second control, the third control, or the fourth control of the battery for the vehicle provides electrical power for the electrical power network.

10. The system (100) according to claim 1, wherein
the controlling unit (240) is configured to provide the electrical power network with electrical energy obtained by integrating electrical power of the multiple movable batteries (12) supplied in the multiple timeframes.

11. A program for causing a computer to function as the system (100) according to any one of claims 1 to 10.

12. A method, comprising:
providing an electrical power network with an electrical power resource by performing,
at least one of a first control for reducing power charging amounts for multiple movable batteries, or a second control for increasing power supplying amounts from the multiple movable batteries to outsides, in response to a first request for requesting power consumption to be reduced, and
at least one of a third control for increasing power charging amounts for the multiple movable batteries, or a fourth control for reducing power supplying amounts from the multiple movable batteries to outsides, in response to a second request for requesting power consumption to be increased;
allocating, based on an amount of electrical power resources available to be provided to the electrical power network by each of the multiple movable batteries, and an amount of electrical power resources required to be provided to the electrical power network, by which of the first control, the second control, the third control, or the fourth control, the each of the multiple movable batteries provides the electrical power network with an electrical power resource in each of multiple timeframes in a future; and
controlling, based on the allocating, a station that charges and discharges the movable batteries, **characterised by**
if consumption power increases in the multiple timeframes, the providing an electrical power network with an electrical power resource includes selecting, among the multiple movable batteries not allocated by the allocating, a movable battery that can provide electrical power for serving the increased consumption power, and providing electrical power for serving the increased consumption power.

13. A computer readable recording medium storing the program according to claim 11.

## Patentansprüche

1. System (100), welches dazu eingerichtet ist, ein Laden mehrerer bewegbarer Batterien (12) und eine Leistungszufuhr der mehreren bewegbaren Batterien (12) nach außen zu steuern, umfassend:
eine Steuereinheit (240) zum Bereitstellen eines elektrischen Leistungsnetzwerks mit einer elektrischen Leistungsquelle durch Durchführen von
wenigstens einer aus einer ersten Steuerung zum Reduzieren von Leistungslademengen für die mehreren bewegbaren Batterien (12) oder einer zweiten Steuerung zum Erhöhen von Leistungslademengen von den mehreren bewegbaren Batterien (12) nach außen, in Erwiderung auf eine erste Anfrage zum Anfragen eines zu reduzierenden Leistungsverbrauchs, und
wenigstens einer aus einer dritten Steuerung zum Erhöhen von Leistungslademengen für die mehreren bewegbaren Batterien (12) oder einer vierten Steuerung zum Reduzieren von Leistungslademengen von den mehreren bewegbaren Batterien (12) nach außen, in Erwiderung auf eine zweite Anfrage zum Anfragen eines zu erhöhenden Leistungsverbrauchs, und
eine Zuordnungseinheit (230) zum Zuordnen, auf Grundlage einer Menge von elektrischen Leistungsquellen, welche dem elektrischen Leistungsnetzwerk durch jede der mehreren bewegbaren Batterien (12) bereitgestellt werden können, und einer Menge von elektrischen Leistungsquellen, welche dem elektrischen Leistungsnetzwerk bereitgestellt werden müssen, durch welche der ersten Steuerung, der zweiten Steuerung, der dritten Steuerung oder der vierten Steuerung jede der mehreren bewegbaren Batterien (12) dem elektrischen Leistungsnetzwerk eine elektrische Leistungsquelle in jedem von mehreren Zeitfenstern in einer Zukunft bereitstellt,
**dadurch gekennzeichnet, dass**,
wenn sich eine Verbrauchsleistung in den mehreren Zeitfenstern erhöht, die Steuereinheit (240) dazu eingerichtet ist, unter den mehreren bewegbaren Batterien, welche nicht durch die Zuordnungseinheit (230) zugeordnet sind, eine bewegbare Batterie auszuwählen, welche eine elektrische Leistung zum Versorgen der erhöhten Verbrauchsleistung bereitstellen kann und eine elektrische Leistung zum Versorgen der erhöhten Verbrauchsleistung bereitstellt, und
dass die Steuereinheit (240) dazu eingerichtet ist, auf Grundlage des Zuordnens, eine Station zu steuern, welche die bewegbaren Batterien (12) lädt und entlädt.

2. System (100) nach Anspruch 1, ferner umfassend:
eine Schätzeinheit (220) zum Schätzen, auf Grundlage von vorhergesagten Verwendungssituationen der mehreren bewegbaren Batterien (12), einer Menge von elektrischen Leistungsquellen, welche dem elektrischen Leistungsnetzwerk durch jede der mehreren bewegbaren Batterien (12) bereitgestellt werden kann, unter Verwendung jeder der ersten Steuerung, der zweiten Steuerung, der dritten Steuerung und der vierten Steuerung in jedem der mehreren Zeitfenster in der Zukunft.

3. System (100) nach Anspruch 2, wobei die Schätzeinheit (220) dazu eingerichtet ist, auf Grundlage von Zielwerten einer durch die mehreren bewegbaren Batterien (12) in jedem Zeitfenster in der Zukunft zu verbrauchenden Verbrauchsleistung und Vorhersagungen von Lade- und Entlademengen der mehreren bewegbaren Batterien (12) in einer Zukunft, eine elektrische Leistungsquelle zu schätzen, welche dem elektrischen Leistungsnetzwerk in jedem der mehreren Zeitfenster in der Zukunft bereitgestellt werden muss.

4. System (100) nach einem der Ansprüche 1 bis 3, wobei die Zuordnungseinheit (230) dazu eingerichtet ist, eine Menge von elektrischen Leistungsquellen zuzuordnen, welche dem elektrischen Leistungsnetzwerk durch jede der mehreren bewegbaren Batterien (12) bereitgestellt werden, unter Verwendung einer aus der ersten Steuerung, der zweiten Steuerung, der dritten Steuerung und der vierten Steuerung in jedem der mehreren Zeitfenster in einer Zukunft.

5. System (100) nach einem der Ansprüche 1 bis 4, wobei die Zuordnungseinheit (230) dazu eingerichtet ist, beim Zuordnen, ob jede der mehreren bewegbaren Batterien (12) dem elektrischen Leistungsnetzwerk eine elektrische Leistungsquelle bereitstellt, bevorzugt die erste Steuerung vor der zweiten Steuerung und die vierte Steuerung vor der dritten Steuerung zuzuordnen.

6. System (100) nach einem der Ansprüche 1 bis 5, wobei die Zuordnungseinheit (230) dazu eingerichtet ist, zuzuordnen, durch welche aus der ersten Steuerung, der zweiten Steuerung, der dritten Steuerung oder der vierten Steuerung jede der mehreren bewegbaren Batterien (12) dem elektrischen Leistungsnetzwerk eine elektrische Leistungsquelle in jedem von mehreren Zeitfenstern in einer Zukunft bereitstellt, um Änderungen in einer elektrischen Ladeleistung oder Entladeleistung der mehreren bewegbaren Batterien (12) dazu zu bringen, gleich oder geringer als vordefinierte Wert zu sein.

7. System (100) nach Anspruch 2, wobei:
die Schätzeinheit (220) dazu eingerichtet ist, zuzuordnen, auf Grundlage einer Menge von elektrischen Leistungsquellen, welche dem elektrischen Leistungsnetzwerk durch jede der mehreren bewegbaren Batterien (12) bereitgestellt werden können, und einer Menge von elektrischen Leistungsquellen, welche dem elektrischen Leistungsnetzwerk bereitgestellt werden müssen, durch welche der ersten Steuerung, der zweiten Steuerung, der dritten Steuerung oder der vierten Steuerung jede der mehreren bewegbaren Batterien (12) dem elektrischen Leistungsnetzwerk eine elektrische Leistungsquelle in jedem von mehreren Zeitfenstern innerhalb einer Periode bereitstellt, in welcher eine auf einem Elektrizitätsmarkt kontrahierte elektrische Leistungsquelle dem elektrischen Leistungsnetzwerk bereitgestellt werden soll; und
die Steuereinheit (240) eingerichtet ist, zum Durchführen
wenigstens einer aus der ersten Steuerung oder der zweiten Steuerung, in Erwiderung auf die erste Anfrage, welche innerhalb der Periode erhalten ist, in welcher die elektrische Leistungsquelle dem elektrischen Leistungsnetzwerk bereitgestellt werden soll, und auf Grundlage einer Menge von elektrischen Leistungsquellen, welche durch die Schätzeinheit (220) geschätzt sind, um dem elektrischen Leistungsnetzwerk bereitgestellt werden zu können, und
wenigstens einer aus der dritten Steuerung oder der vierten Steuerung, in Erwiderung auf die zweite Anfrage, welche innerhalb der Periode erhalten ist, in welcher die elektrische Leistungsquelle dem elektrischen Leistungsnetzwerk bereitgestellt werden soll, und auf Grundlage einer Menge von elektrischen Leistungsquellen, welche durch die Schätzeinheit (220) geschätzt sind, um dem elektrischen Leistungsnetzwerk bereitgestellt werden zu können.

8. System (100) nach einem der Ansprüche 1 bis 7, wobei die mehreren bewegbaren Batterien (12) Batterien umfassen, welche an Fahrzeugen (10) angebracht sind.

9. System (100) nach Anspruch 8, wobei die mehreren bewegbaren Batterien (12) Batterien umfassen, welche an den Fahrzeugen (10) angebracht sind und an mehreren Stationen wechselbar sind, und
die Zuordnungseinheit (230) dazu eingerichtet ist, zuzuordnen, auf Grundlage einer Wechselhistorie der Batterien in den mehreren Stationen, wobei die erste Steuerung, die zweite Steuerung, die dritte Steuerung oder die vierte Steuerung der Batterie für das Fahrzeug elektrische Leistung für das elektrische Leistungsnetzwerk bereitstellt.

10. System (100) nach Anspruch 1, wobei die Steuereinheit (240) dazu eingerichtet ist, dem elektrischen Leistungsnetzwerk elektrische Energie bereitzustellen, welche durch integrierte elektrische Leistung der mehreren bewegbaren Batterien (12) erhalten ist, welche in den mehreren Zeitfenstern zugeführt ist.

11. Programm zum Veranlassen eines Computers als das System (100) nach einem der Ansprüche 1 bis 10 zu fungieren.

12. Verfahren, umfassend:
Bereitstellen eines elektrischen Leistungsnetzwerks mit einer elektrischen Leistungsquelle durch Durchführen von
wenigstens einer aus einer ersten Steuerung zum Reduzieren von Leistungslademengen für mehrere bewegbare Batterien oder einer zweiten Steuerung zum Erhöhen von Leistungslademengen von den mehreren bewegbaren Batterien nach außen, in Erwiderung auf eine erste Anfrage zum Anfragen eines zu reduzierenden Leistungsverbrauchs, und
wenigstens einer aus einer dritten Steuerung zum Erhöhen von Leistungslademengen für die mehreren bewegbaren Batterien oder einer vierten Steuerung zum Reduzieren von Leistungslademengen von den mehreren bewegbaren Batterien nach außen, in Erwiderung auf eine zweite Anfrage zum Anfragen eines zu erhöhenden Leistungsverbrauchs;
Zuordnen, auf Grundlage einer Menge von elektrischen Leistungsquellen, welche dem elektrischen Leistungsnetzwerk durch jede der mehreren bewegbaren Batterien bereitgestellt werden können, und einer Menge von elektrischen Leistungsquellen, welche dem elektrischen Leistungsnetzwerk bereitgestellt werden müssen, durch welche der ersten Steuerung, der zweiten Steuerung, der dritten Steuerung oder der vierten Steuerung jede der mehreren bewegbaren Batterien dem elektrischen Leistungsnetzwerk eine elektrische Leistungsquelle in jedem von mehreren Zeitfenstern in einer Zukunft bereitstellt; und
Steuern, auf Grundlage des Zuordnens, einer Station, welche die bewegbaren Batterien lädt und entlädt,
**dadurch gekennzeichnet, dass**,
wenn sich eine Verbrauchsleistung in den mehreren Zeitfenstern erhöht, das Bereitstellen eines elektrischen Leistungsnetzwerkes mit einer elektrischen Leistungsquelle ein Auswählen, unter den mehreren bewegbaren Batterien, welche nicht durch das Zuordnen zugeordnet sind, einer bewegbaren Batterie, welche eine elektrische Leistung zum Versorgen der erhöhten Verbrauchsleistung bereitstellen kann, und ein Bereitstellen einer elektrischen Leistung zum Versorgen der erhöhten Verbrauchsleistung umfasst.

13. Computerlesbares Aufnahmemedium, welches das Programm nach Anspruch 11 speichert.

## Revendications

1. Système (100) configuré pour commander la charge de multiples batteries mobiles (12), et l'alimentation électrique des multiples batteries mobiles (12) vers l'extérieur, comportant :
une unité de commande (240) destinée à fournir une ressource d'alimentation électrique à un réseau d'alimentation électrique en réalisant,
au moins l'une parmi une première commande de réduction de quantités de charge électrique pour les multiples batteries mobiles (12), ou une deuxième commande d'augmentation des quantités d'alimentation électrique des multiples batteries mobiles (12) vers l'extérieur, en réponse à une première demande de réduction de la consommation électrique, et
au moins l'une parmi une troisième commande d'augmentation des quantités de charge électrique pour les multiples batteries mobiles (12), ou une quatrième commande de réduction des quantités d'alimentation électrique des multiples batteries mobiles (12) vers l'extérieur, en réponse à une deuxième demande d'augmentation de la consommation électrique ; et
une unité de désignation (230) destinée à désigner, sur la base d'une quantité de ressources d'alimentation électrique disponible pour être fournie au réseau d'alimentation électrique par chacune des multiples batteries mobiles (12), et d'une quantité de ressources d'alimentation électrique devant être fournie au réseau d'alimentation électrique, par quelle commande parmi la première commande, la deuxième commande, la troisième commande ou la quatrième commande chacune des multiples batteries mobiles (12) fournit au réseau d'alimentation électrique une ressource d'alimentation électrique dans chacun de multiples délais dans le futur, **caractérisé en ce que**
si la puissance consommée augmente dans les multiples délais, l'unité de commande (240) est configurée pour sélectionner, parmi les multiples batteries mobiles non désignées par l'unité de désignation (230), une batterie mobile qui peut fournir une alimentation électrique pour délivrer la puissance consommée accrue, et fournir une alimentation électrique pour délivrer la puissance consommée accrue, et
l'unité de commande (240) est configurée pour commander, sur la base de la désignation, une station qui charge et décharge les batteries mobiles (12).

2. Système (100) selon la revendication 1, comportant en outre :
une unité d'estimation (220) pour estimer, sur la base de situations d'utilisation prédites des multiples batteries mobiles (12), une quantité de ressources d'alimentation électrique qui peut être fournie au réseau d'alimentation électrique par chacune des multiples batteries mobiles (12) en utilisant chacune de la première commande, de la deuxième commande, de la troisième commande et de la quatrième commande dans chacun des multiples délais dans le futur.

3. Système (100) selon la revendication 2, dans lequel l'unité d'estimation (220) est configurée pour estimer, sur la base de valeurs cibles de puissance consommée devant être consommée par les multiples batteries mobiles (12) dans chaque délai dans le futur, et de prédictions de quantités de charge/décharge des multiples batteries mobiles (12) dans le futur, une ressource d'alimentation électrique devant être fournie au réseau d'alimentation électrique dans chacun des multiples délais dans le futur.

4. Système (100) selon l'une quelconque des revendications 1 à 3, dans lequel l'unité de désignation (230) est configurée pour désigner une quantité de ressources d'alimentation électrique devant être fournie au réseau d'alimentation électrique par chacune des multiples batteries mobiles (12) en utilisant l'une quelconque de la première commande, de la deuxième commande, de la troisième commande et de la quatrième commande dans chacun des multiples délais dans le futur.

5. Système (100) selon l'une quelconque des revendications 1 à 4, dans lequel l'unité de désignation (230) est configurée pour désigner préférentiellement, lors de la désignation de la fourniture ou non d'une ressource d'alimentation électrique au réseau d'alimentation électrique par chacune des multiples batteries mobiles (12), la première commande avant la deuxième commande, et la quatrième commande avant la troisième commande.

6. Système (100) selon l'une quelconque des revendications 1 à 5, dans lequel l'unité de désignation (230) est configurée pour désigner, de manière à amener des changements de puissance de charge électrique ou de puissance de décharge des multiples batteries mobiles (12) à être inférieurs ou égaux à des valeurs prédéfinies, par quelle commande parmi la première commande, la deuxième commande, la troisième commande ou la quatrième commande chacune des multiples batteries mobiles (12) fournit une ressource d'alimentation électrique au réseau d'alimentation électrique dans chacun des multiples délais dans le futur.

7. Système (100) selon la revendication 2, dans lequel :
l'unité d'estimation (220) est configurée pour désigner, sur la base d'une quantité de ressources d'alimentation électrique disponible pour être fournie au réseau d'alimentation électrique par chacune des multiples batteries mobiles (12), et d'une quantité de ressources d'alimentation électrique devant être fournie au réseau d'alimentation électrique, par quelle commande parmi la première commande, la deuxième commande, la troisième commande ou la quatrième commande chacune des multiples batteries mobiles (12) fournit une ressource d'alimentation électrique au réseau d'alimentation électrique dans chacun de multiples délais dans une période pendant laquelle une ressource d'alimentation électrique sous contrat sur un marché de l'électricité doit être fournie au réseau d'alimentation électrique ; et
l'unité de commande (240) est configurée pour réaliser,
au moins l'une de la première commande ou de la deuxième commande, en réponse à la réception de la première demande dans la période pendant laquelle la ressource d'alimentation électrique doit être fournie au réseau d'alimentation électrique et sur la base d'une quantité de ressources d'alimentation électrique estimée par l'unité d'estimation (220) comme étant disponible pour être fournie au réseau d'alimentation électrique, et
au moins l'une de la troisième commande ou de la quatrième commande, en réponse à la réception de la deuxième demande dans la période pendant laquelle la ressource d'alimentation électrique doit être fournie au réseau d'alimentation électrique et sur la base d'une quantité de ressources d'alimentation électrique estimée par l'unité d'estimation (220) comme étant disponible pour être fournie au réseau d'alimentation électrique.

8. Système (100) selon l'une quelconque des revendications 1 à 7, dans lequel les multiples batteries mobiles (12) comprennent des batteries montées sur des véhicules (10).

9. Système (100) selon la revendication 8, dans lequel les multiples batteries mobiles (12) comprennent des batteries qui sont montées sur les véhicules (10) et interchangeables à de multiples stations, et
l'unité de désignation (230) est configurée pour désigner, sur la base d'un historique d'échange des batteries dans les multiples stations, par quelle commande parmi la première commande, la deuxième commande, la troisième commande ou la quatrième commande la batterie pour le véhicule fournit une alimentation électrique pour le réseau d'alimentation électrique.

10. Système (100) selon la revendication 1, dans lequel
l'unité de commande (240) est configurée pour fournir au réseau d'alimentation électrique de l'énergie électrique obtenue en intégrant l'alimentation électrique des multiples batteries mobiles (12) fournie dans les multiples délais.

11. Programme pour amener un ordinateur à fonctionner comme le système (100) selon l'une quelconque des revendications 1 à 10.

12. Procédé, comportant :
la fourniture d'une ressource d'alimentation électrique à un réseau d'alimentation électrique en réalisant,
au moins l'une parmi une première commande de réduction de quantités de charge électrique pour de multiples batteries mobiles, ou une deuxième commande d'augmentation des quantités d'alimentation électrique des multiples batteries mobiles vers l'extérieur, en réponse à une première demande de réduction de la consommation électrique, et
au moins l'une parmi une troisième commande d'augmentation des quantités de charge électrique pour les multiples batteries mobiles, ou une quatrième commande de réduction des quantités d'alimentation électrique des multiples batteries mobiles vers l'extérieur, en réponse à une deuxième demande d'augmentation de la consommation électrique ;
la désignation, sur la base d'une quantité de ressources d'alimentation électrique disponible pour être fournie au réseau d'alimentation électrique par chacune des multiples batteries mobiles, et d'une quantité de ressources d'alimentation électrique devant être fournie au réseau d'alimentation électrique, d'une commande parmi la première commande, la deuxième commande, la troisième commande ou la quatrième commande par laquelle chacune des multiples batteries mobiles fournit une ressource d'alimentation électrique au réseau d'alimentation électrique dans chacun de multiples délais dans le futur ; et
la commande, sur la base de la désignation, d'une station qui charge et décharge les batteries mobiles, **caractérisé en ce que**
si la puissance consommée augmente dans les multiples délais, la fourniture d'une ressource d'alimentation électrique à un réseau d'alimentation électrique comprend la sélection, parmi les multiples batteries mobiles non désignées par la désignation, d'une batterie mobile qui peut fournir une alimentation électrique pour délivrer la puissance consommée accrue, et la fourniture d'une alimentation électrique pour délivrer la puissance consommée accrue.

13. Support d'enregistrement lisible par ordinateur stockant le programme selon la revendication 11.
